# EUROPEAN PATENT SPECIFICATION

(11) **EP 1 657 772 B1**
(45) Date of publication and mention of the grant of the patent: **25.08.2010**
(21) Application number: 05290195.6
(22) Date of filing: 28.01.2005
(51) Int. Cl.: H01M 8/10, H01M 8/24

(54) **Solid polymer electrolyte membrane electrode assembly and solid polymer electrolyte fuel cell using same**
Festpolymerelektrolyt-Membranelektrodeneinheit und eine diese verwendende Festpolymerelektrolyt-Brennstoffzelle
Assemblage membrane-électrode à électrolyte solide polymérique et pile à combustible à électrolyte solide polymérique l'utilisant

(30) Priority: 11.11.2004 JP 2004327487
(43) Date of publication of application: 17.05.2006
(73) Proprietor: MITSUBISHI HEAVY INDUSTRIES, LTD., Tokyo 108-8215 (JP)
(72) Inventor: WATANABE, Satoru c/o MITSUBISHI HEAVY INDUSTRIES,LTD.,, Yokohama-shi, Kanagawa, (JP); TSURUMAKI, Shigeru c/o MITSUBISHI HEAVY INDUSTRIES, LTD.,, Hiroshima-shi, Hiroshima, (JP); TOYODA, Ichiro c/o MITSUBISHI HEAVY INDUSTRIES, LTD.,, Yokohama-shi, Kanagawa, (JP); Yashima, Yoshimi c/o MITSUBISHI HEAVY INDUSTRIES, LTD, Yokohama-shi, Kanagawa (JP); Ito Hideki c/o MITSUBISHI HEAVY INDUSTRIES, LTD, 6-22, Kan-on-shin-machi 4-chome. Nishi-ku Hiroshima-shi Hiroshima (JP); Yamada Akihiko c/o MITSUBISHI HEAVY INDUSTRIES LTD., Hiroshima-shi Hiroshima (JP)
(74) Representative: Hart-Davis, Jason

(56) References cited:
- EP-A- 1 271 682
- EP-A2- 1 657 772
- US-A1- 2004 112 754

## Description

### Technical Field

This invention relates to a solid polymer electrolyte membrane electrode assembly, and a solid polymer electrolyte fuel cell using it.

### Background Art

A solid polymer electrolyte fuel cell is composed of a stack of a plurality of solid polymer electrolyte membrane electrode assemblies (cells), each of the cells comprising a solid polymer electrolyte membrane having proton (H⁺) conductivity, and a fuel electrode membrane and an oxidant electrode membrane sandwiching the solid polymer electrolyte membrane. A fuel gas containing hydrogen (H₂) is supplied to the fuel electrode membrane, while an oxidant gas containing oxygen (O₂) is supplied to the oxidant electrode membrane, whereby hydrogen and oxygen are reacted electrochemically via the solid polymer electrolyte membrane to obtain electric power. (See Japanese Patent Application Laid-Open No. 2004-018573.)

With such a solid polymer electrolyte fuel cell, if the solid polymer electrolyte membrane becomes dry, the proton conductivity of this membrane decreases. Thus, the membrane is humidified to avoid the dry state of the membrane. If, on this occasion, water due to humidification stagnates within the stack or cell, together with water generated by a cell reaction, the flow of the fuel gas or the oxidant gas may be impeded to cause instability to power generation output. To maximize the electrical efficiencyof the fuel cell system, moreover, it is desired to minimize electrical auxiliary power necessary for humidification of the membrane. Thus, it is attempted to keep the humidification to a minimum.

In the foregoing conventional solid polymer electrolyte fuel cell, side reaction products, such as hydrogen peroxide (H₂O₂), are formed when hydrogen and oxygen are supplied into the cell, or during the aforementioned reaction. At this time, impurities such as iron ions (Fe²⁺) may slip into the stack or cell, and contact the hydrogen peroxide. In this case, the impurities such as iron ions act as a catalyst to form radicals, such as hydroxy radicals (·OH), from the hydrogen peroxide. The hydroxy radicals react with the solid polymer electrolyte membrane, posing the problem of decomposing and deteriorating the solid polymer electrolyte membrane.

Such a problem is apt to occur if the humidification of the solid polymer electrolyte membrane is excessively suppressed. In the conventional solid polymer electrolyte fuel cell, therefore, its operation needs to be managed with the utmost caution so that predetermined humidification conditions are always maintained.

Before or during power generation at the start or stop of operation, or during load following operation, on a daily basis, moreover, the solid polymer electrolyte membrane may fall into a dry state. In this case, it is highly likely that this membrane will undergo the above-described deterioration, resulting in a long-term decrease in durability.

In order to avoid this deterioration process, the European patent application EP 1 271 682 A2 proposes a solid polymer electrolyte membrane assembly comprising a fuel electrode membrane disposed on one surface of a solid polymer electrolyte membrane, and an oxidant electrode membrane disposed on other surface of said solid polymer electrolyte membrane. Furthermore, the cell described in this European patent application can contain salts of group 1b element.

The US patent application US 2004/0112754 A1 also discloses a solid polymer electrolyte membrane assembly similar to the one previously described. Furthermore, the polymer electrolyte membrane specified in said US patent application can contain salts of Mn or Ag after impregnation. However, the document US 2004/0112754 A1 aims to provide a method by which optimal catalytic loading is achieved on the electrodes of a polymer-electrolyte membrane fuel cell, and not to provide a solution against the degradation of the polymer electrolyte membrane.

### Summary of the Invention

The content of claims 1 and 2 is herewith incorporated by reference.

The object of the present invention is to provide a solid polymer electrolyte membrane electrode assembly according to claim 1 and a solid polymer electrolyte fuel cell according to claim 2, which enable operation management related to humidification of a solid polymer electrolyte membrane to be easily performed, which suppress the deterioration of the solid polymer electrolyte membrane even after the start or stop of operation or after load following operation on a daily basis, thereby enhancing long-term durability to achieve a decrease in the frequency of maintenance such as replacement.

In accordance with the solid polymer electrolyte membrane electrode assembly of the present invention, even when the humidification of the solid polymer electrolyte membrane is suppressed greatly, the generation of hydroxy radicals due to entry of impurities such as iron ions (Fe²⁺) can be inhibited, and the deterioration of the solid polymer electrolyte membrane by the generated hydroxy radicals can be suppressed. Thus, long-term durability can be improved.

Consequently, the solid polymer electrolyte fuel cell according to the present invention can achieve improvements in the electrical efficiency and stable operability of the fuel cell system owing to decreases in the amount of humidification of the solid polymer electrolyte membrane, and can markedly increase the flexibility of the operating conditions concerned with the humidification of the solid polymer electrolyte membrane. Thus, the operation management of the fuel cell related to the humidification can be easily performed and, even after the start or stop of operation or after load following operation on a daily basis, long-term durability can be enhanced, and a decrease in the frequency of maintenance such as replacement can be achieved to decrease the running cost.

### Brief Description of the Drawings

The present invention will become more fully understood from the detailed description given hereinbelow and the accompanying drawings which are given by way of illustration only, and thus are not limitative of the present invention, and wherein:

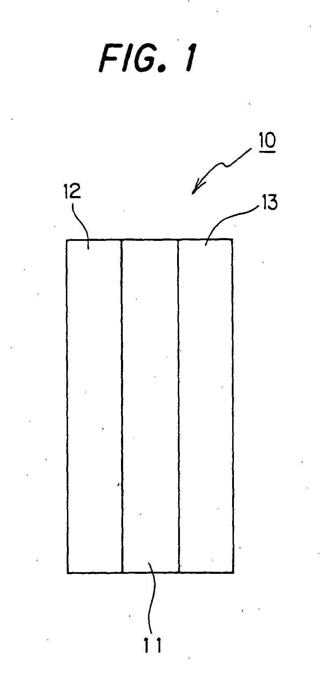

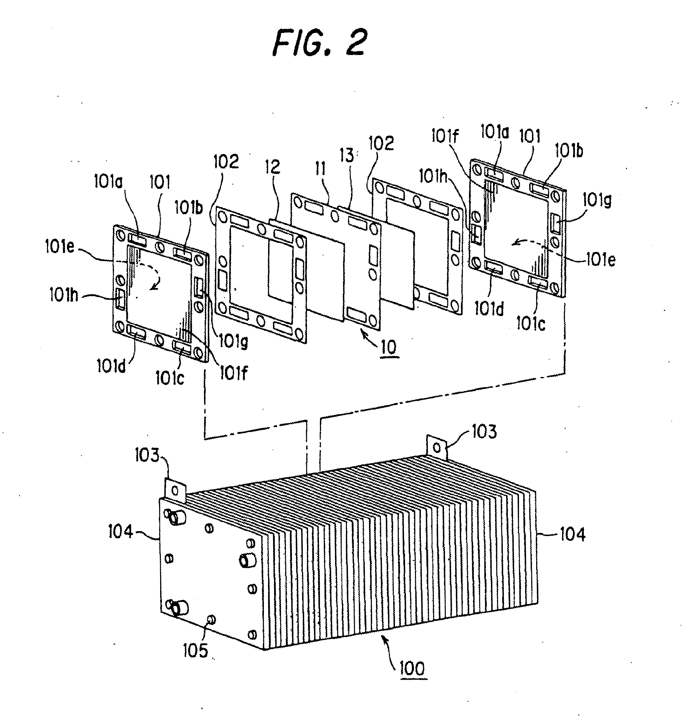

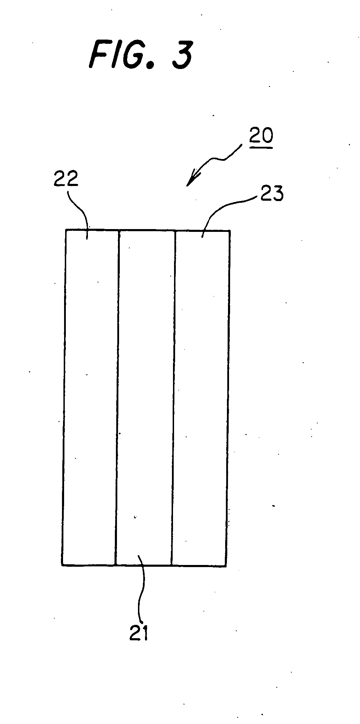

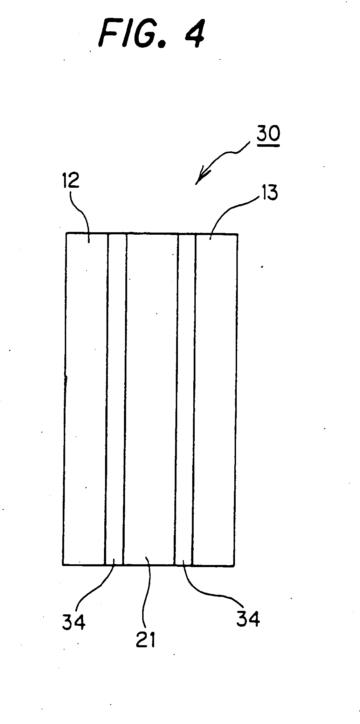

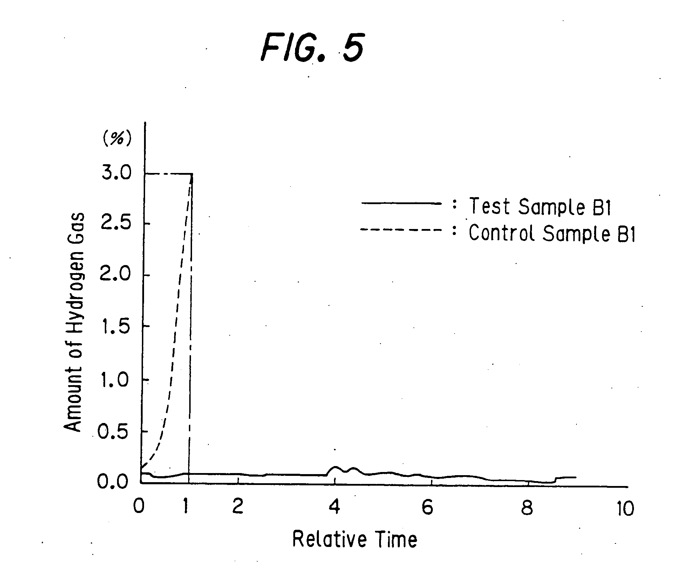

FIG. 1 is a schematic configuration drawing of a first embodiment of a solidpolymer electrolyte membrane electrode assembly according to the present invention; FIG. 2 is a schematic configuration drawing of a stack as a first embodiment of a solid polymer electrolyte fuel cell according to the present invention; FIG. 3 is a schematic configuration drawing of a second embodiment of a solid polymer electrolyte membrane electrode assembly according to the present invention; FIG. 4 is a schematic configuration drawing of a third embodiment of a solid polymer electrolyte membrane electrode assembly according to the present invention; and FIG. 5 is a graph showing changes in the amount of hydrogen, over time, leaked from a fuel electrode membrane to an oxidant electrode membrane in test sample B1 and control sample B1.

### Detailed Description

Embodiments of a solid polymer electrolyte membrane electrode assembly and a solid polymer electrolyte fuel cell using it, according to the present invention, will now be described by reference to the accompanying drawings, but the present invention is in no way limited to the following embodiments.

### First Embodiment

A first embodiment of each of a solid polymer electrolyte membrane electrode assembly and a solid polymer electrolyte fuel cell using it, according to the present invention, will be described based on FIGS. 1 and 2. FIG. 1 is a schematic configuration drawing of the solid polymer electrolyte membrane electrode assembly, and FIG. 2 is a schematic configuration drawing of a stack as the solid polymer electrolyte fuel cell.

The solid polymer electrolyte membrane electrode assembly according to the present invention, as shown in FIG. 1, is a solid polymer electrolyte membrane electrode assembly (hereinafter referred to as "cell") 10, which comprises a fuel electrode membrane 12 disposed on one surface of a solid polymer electrolyte membrane 11, and an oxidant electrode membrane 13 disposed on the other surface of the solid polymer electrolyte membrane 11, and in which ions of at least one metal of Ce, Tl, Mn, Ag and Yb are contained in the solid polymer electrolyte membrane 11 of the cell 10.

The solid polymer electrolyte membrane 11 is a cation exchanger polymer (e.g., "Nafion" (registered trademark), Du Pont) containing proton (H⁺) conducting groups (e.g., sulfonic acid groups (SO₃⁻)), and having the above-mentioned ions of the metal coordinated on some of the proton conducting groups.

The solid polymer electrolyte membrane 11 can be easily obtained by dipping the above cation exchanger polymer in a solution containing the above ions of the metal. By dipping the cation exchanger polymer in the solution containing the ions of the metal at a prescribed concentration for a prescribed period of time, the ions of the metal coordinated on the proton conducting groups can be easily adjusted to a desired amount.

Examples of the cation exchanger polymer are ion exchangers formed by sulfonating part of polymers, such as polybenzoxazole (PBO), polybenzothiazole (PBT), polybenzimidazole (PBI), polysulfone (PSU), polyether sulfone (PES), polyether ether sulfone (PEES), polyphenylene oxide (PPO), polyphenylene sulfoxide (PPSO), polyphenylene sulfide (PPS), polyphenylene sulfide sulfone (PPS/SO₂), poly-para-phenylene (PPP), polyether ketone (PEK), polyether ether ketone (PEEK), polyether ketone ketone (PEKK), and polyimide (PI). These ion exchanger polymers can be used alone, or as copolymers or mixtures of a plurality of these. Particularly, the use of cation exchanger polymers formed by sulfonating part of PPSO, PPS, and PPS/SO₂ is preferred from the viewpoint of their characteristics and versatility. Further, the use of a cation exchanger polymer formed by sulfonating part of PPS is more preferred.

The fuel electrode membrane 12 is a carbon powder bound in a membranous form with the use of a binder comprising a polymer electrolyte such as a cation exchanger polymer, the carbon powder having a Pt-Ru-based catalyst carried thereon. The fuel electrode membrane 12 can be easily disposed on one surface of the solid polymer electrolyte membrane 11 by dispersing the catalyst-carried carbon powder and the binder in a solvent (e.g., ethanol) to form a slurry, and spraying or coating the slurry onto one surface of the solid polymer electrolyte membrane 11, followed by drying.

The oxidant electrode membrane 13 is a carbon powder bound in a membranous form with the use of a binder comprising a polymer electrolyte such as a cation exchanger polymer, the carbon powder having a Pt-based catalyst carried thereon. The oxidant electrode membrane 13, like the fuel electrode membrane 12, can be easily disposed on the other surface of the solid polymer electrolyte membrane 11 by dispersing the catalyst-carried carbon powder and the binder in a solvent (e.g., ethanol) to form a slurry, and spraying or coating the slurry onto the other surface of the solid polymer electrolyte membrane 11, followed by drying.

The so constructed cell 10 is sandwiched between carbon cloths or carbon papers which are gas diffusion layers having gas diffusibility and electrical conductivity. Further, as shown in FIG. 2, this sandwich is held between a combination of a separator 101 and a gasket 102 located on one side of the sandwich and the same combination located on the other side of the sandwich, the separator 101 having conductivity and having a fuel gas supply manifold 101a, an oxidant gas supply manifold 101b, a fuel gas discharge manifold 101c, and an oxidant gas discharge manifold 101d formed therein and also having a fuel gas channel 101e formed on one surface thereof and an oxidant gas channel 101f formed on the other surface thereof to form a composite. Apluralityof the resulting composites are stacked, current collectors 103 and flanges 104 are disposed at the opposite ends in the stacking direction, and these components are fastened by fastening bolts 105 to constitute a stack 100. In FIG. 2, 101g denotes a cooling water supply manifold for supplying cooling water through a cooling water passage formed within the separator 101, and 101h denotes a cooling water discharge manifold for discharging cooling water which has flowed through the cooling water passage.

In the solid polymer electrolyte fuel cell according to the present embodiment, which has such stack 100, a fuel gas containing hydrogen (H₂) is fed to the fuel gas channel101e through the fuel gas supply manifold 101a of each separator 101, and supplied to the fuel electrode membrane 12 of each cell 10 via the gas diffusion layer. Also, an oxidant gas containing oxygen (O₂) is fed to the oxidant gas channel 101f through the oxidant gas supply manifold 101b of each separator 101, and supplied to the oxidant electrode membrane 13 of each cell 10 via the gas diffusion layer. As a result, hydrogen and oxygen react electrochemically in each cell 10, whereby electricity can be withdrawn from the current collector 103.

The used fuel gas after the reaction is flowed through the fuel gas discharge manifold 101c of each separator 101, and discharged to the outside of the stack 100. The used oxidant gas after the reaction is flowed through the oxidant gas discharge manifold 101d of each separator 101, and discharged to the outside of the stack 100.

When hydrogen and oxygen are supplied into the cell 10, or during the above-mentioned reaction, there maybe a case where a side reactionproduct such as hydrogen peroxide (H₂O₂) is formed, and impurities such as iron ions (Fe²⁺) may further enter the stack 100 or the cell 10. In this case, the impurities such as iron ions act as a catalyst to generate radicals, such as hydroxy radicals (·OH), from hydrogen peroxide. The hydroxy radicals try to react with the solid polymer electrolyte membrane 11, promoting the decomposition of the solid polymer electrolyte membrane 11. However, the solid polymer electrolyte membrane 11 contains the aforementioned ions of the metal, and thus, the solid polymer electrolyte membrane 11 is inhibited from being deteriorated without being decomposed. The reason behind this advantage is not clear, but the following mechanism is assumed to work:
If, in the stack 100 or cell 10, hydrogen peroxide is formed and impurities (e.g., iron ions) enter, the aforementioned ions of the metal (e.g., Ce ions) in the solid polymer electrolyte membrane 11, the impurities, and the hydrogen peroxide are assumed to cause the following reactions:

   2Ce³⁺ + H₂O₂ + 2H⁺ → 2Ce⁴⁺ + 2H₂O (1)

   Ce⁴⁺ + Fe²⁺ → Ce³⁺ + Fe³⁺ (2)

   Fe²⁺ + H₂O₂ → Fe³⁺ + ·OH + OH⁻ (3)

   Ce³⁺ + ·OH → Ce⁴⁺ + OH⁻ (4)

That is, cerium ions may act as follows: Ce³⁺ reacts with hydrogen peroxide to turn into Ce⁴⁺ and reduce hydrogen peroxide into water (the above equation (1)). Ce⁴⁺ reacts with Fe²⁺ to turn into Ce³⁺ and oxidize Fe²⁺ into Fe³⁺ (the above equation (2)). Hydroxy radicals generated by the reaction between Fe²⁺ and hydrogen peroxide (the above equation (3)) react with Ce³⁺, forming Ce⁴⁺ and converting the hydroxy radicals into chemically stable hydroxide ions (the above equation (4)).

That is, the ions of the metal, such as cerium ions, are presumed to have the following actions: They change hydrogen peroxide, which is a source of hydroxy radicals, into water. They also change Fe²⁺, which generates hydroxy radicals from hydrogen peroxide, into Fe³⁺, and at the same time, change the resulting hydroxy radicals into hydroxide ions.

In short, the ions of the metal are considered to perform the functions of (1) stopping the catalytic action of the impurities entering the stack, such as iron ions (Fe²⁺), (2) restoring hydrogen peroxide to water before generationof hydroxy radicals, and (3) converting hydroxy radicals into hydroxide ions before their reaction with the solid polymer electrolyte membrane 11.

Hence, even if the impurities, such as iron ions (Fe²⁺), enter the stack 100 or cell 10, it is assumed that the generation of hydroxy radicals is suppressed, and the deterioration of the solid polymer electrolyte membrane 11 by hydroxy radicals which have been generated is inhibited.

According to the cell 10 of the present embodiment, therefore, even when the humidification of the solid polymer electrolyte membrane 11 is greatly suppressed, the generation of hydroxy radicals due to the entry of impurities such as iron ions (Fe²⁺) can be curbed, and the deterioration of the solid polymer electrolyte membrane 11 by hydroxy radicals which have been generated can be inhibited. Thus, long-term durability can be enhanced.

Consequently, the solid polymer electrolyte fuel cell according to the present embodiment can achieve improvements in the electrical efficiency and stable operability of the fuel cell system owing to decreases in the amount of humidification of the solid polymer electrolyte membrane 11, and can markedly increase the flexibility of the operating conditions concerned with the humidification of the solid polymer electrolyte membrane 11. Thus, the operation management of the fuel cell related to the humidification can be easilyperformed and, even after the start or stop of operation or after load following operation on a daily basis, long-term durability can be enhanced, and a decrease in the frequency of maintenance such as replacement can be achieved to decrease the running cost.

The solid polymer electrolyte membrane 11 preferably has 0.007 to 1.65 mmols/g of its proton conducting substituents substituted by the aforementioned ions of the metal. (Particularly, the amount of substitution is more preferably 0.03 to 0.82 mmol/g, and further preferably 0.06 to 0.5 mmol/g.) This is because if the amount of substitution is less than 0.007 mmol/g, the aforementioned functions of the ions of the metal are not fully performed, and if the amount of substitution exceeds 1.65 mmols/g, it becomes difficult to obtain adequate power generation performance.

### Second Embodiment

A second embodiment of each of a solid polymer electrolyte membrane electrode assembly and a solid polymer electrolyte fuel cell using it, according to the present invention, will be described based on FIG. 3. FIG. 3 is a schematic configuration drawing of the solid polymer electrolyte membrane electrode assembly. The same parts as those in the foregoing first embodiment will be indicated by the same numerals as the numerals used in the first embodiment, to avoid overlaps of the explanations offered in the first embodiment.

The solid polymer electrolyte membrane electrode assembly according to the present embodiment, as shown in FIG. 3, is a solid polymer electrolyte membrane electrode assembly (cell) 20, which comprises a fuel electrode membrane 22 disposed on one surface of a solid polymer electrolyte membrane 21, and an oxidant electrode membrane 23 disposed on the other surface of the solid polymer electrolyte membrane 21, and in which ions of at least one metal of Ce, T1, Mn, Ag and Yb are contained in the fuel electrode membrane 22 and the oxidant electrode membrane 23 of the cell 20.

The solid polymer electrolyte membrane 21 is a cation exchanger polymer (e.g., "Nafion" (registered trademark), Du Pont) containing proton (H⁺) conducting groups (e.g., sulfonic acid groups (SO₃⁻)).

The fuel electrode membrane 22 is a carbon powder bound in a membranous form with the use of a binder comprising a polymer electrolyte such as a cation exchanger polymer, the carbon powder having a Pt-Ru-based catalyst carried thereon. The fuel electrode membrane 22 has the above-mentioned ions of the metal coordinated on some of the proton conducting groups of the binder.

The fuel electrode membrane 22 can be easily disposed on one surface of the solid polymer electrolyte membrane 21 by dispersing the catalyst-carried carbon powder, the binder, and a compound which forms the ions of the metal (for example, an oxide, a hydroxide, a halide (chloride, fluoride or the like), an inorganic acid salt compound (sulfate, carbonate, nitrate or phosphate), or an organic acid salt compound (acetate, oxalate or the like) of the aforementioned metal), in a solvent (e.g., ethanol) to form a slurry, and spraying or coating the slurry onto one surface of the solid polymer electrolyte membrane 21, followed by drying.

The oxidant electrode membrane 23 is a carbon powder bound in a membranous form with the use of a binder comprising a polymer electrolyte such as a cation exchanger polymer, the carbon powder having a Pt-based catalyst carried thereon. The oxidant electrode membrane 23 has the above-mentioned ions of the metal coordinated on some of the proton conducting groups of the binder.

The oxidant electrode membrane 23, like the fuel electrode membrane 22, can be easily disposed on the other surface of the solid polymer electrolyte membrane 21 by dispersing the catalyst-carried carbon powder, the binder, and a compound which forms the ions of the metal (for example, an oxide, a hydroxide, a halide (chloride, fluoride or the like), an inorganic acid salt compound (sulfate, carbonate, nitrate orphosphate), or an organic acid salt compound (acetate, oxalate or the like) of the aforementioned metal), in a solvent (e.g., ethanol) to form a slurry, and spraying or coating the slurry onto the other surface of the solid polymer electrolyte membrane 21, followed by drying.

That is, the aforementioned first embodiment is the cell 10 having the solid polymer electrolyte membrane 11 containing the ions of the metal, whereas the present embodiment is the cell 20 having the fuel electrode membrane 22 and the oxidant electrode membrane 23, each of the membranes containing the ions of the metal.

A solid polymer electrolyte fuel cell according to the present embodiment, which has a stack constituted in the same manner as in the aforementioned first embodiment using the so constructed cell 20, is operated in the same way as in the first embodiment, whereby electric power can be obtained.

When hydrogen and oxygen are supplied into the cell 20, or during the above-mentioned reaction, there maybe a case where a side reaction product such as hydrogen peroxide (H₂O₂) is formed, and impurities such as iron ions (Fe²⁺) may further enter the stack or the cell 20. Even in this case, the fuel electrode membrane 22 and the oxidant electrode membrane 23 contain the aforementioned ions of the metal, and thus, the solid polymer electrolyte membrane 21 is inhibited from being deteriorated without being decomposed, as in the first embodiment.

The reason behind this advantage is not clear, but the aforementioned ions of the metal (e.g., Ce ions) contained in the fuel electrode membrane 22 and the oxidant electrode membrane 23 of the cell 20, the impurities (e.g., iron ions), and the hydrogen peroxide are assumed to react in the same manner as in the first embodiment. That is, the ions of the metal in the fuel electrode membrane 22 and the oxidant electrode membrane 23, such as cerium ions, change hydrogen peroxide, which is a source of hydroxy radicals, into water. They also change Fe²⁺, which generates hydroxy radicals from hydrogen peroxide, into Fe³⁺, and at the same time, change the resulting hydroxy radicals into hydroxide ions.

Hence, even if the impurities, such as iron ions (Fe²⁺), enter the stack or cell 20, it is assumed that the generation of hydroxy radicals is suppressed, and the deterioration of the solid polymer electrolyte membrane 21 by hydroxy radicals which have been generated is inhibited, as in the first embodiment.

According to the cell20 of the present embodiment, therefore, even when the humidification of the solid polymer electrolyte membrane 21 is greatly suppressed, the generation of hydroxy radicals due to the entry of impurities such as iron ions (Fe²⁺) can be curbed, and the deterioration of the solid polymer electrolyte membrane 21 by hydroxy radicals which have been generated can be inhibited, as in the first embodiment. Thus, long-term durability can be enhanced.

Consequently, the solid polymer electrolyte fuel cell according to the present embodiment, as in the aforementioned first embodiment, can achieve improvements in the electrical efficiency and stable operability of the fuel cell system owing to decreases in the amount of humidification of the solid polymer electrolyte membrane 21, and can markedly increase the flexibility of the operating conditions concerned with the humidification of the solid polymer electrolyte membrane 21. Thus, the operation management of the fuel cell related to the humidification canbe easilyperformed and, even after the start or stop of operation or after load following operation on a daily basis, long-term durability can be enhanced, and a decrease in the frequency of maintenance such as replacement can be achieved to decrease the running cost.

The fuel electrode membrane 22 and the oxidant electrode membrane 23 preferably contain the compound, which generates the ions of the metal, so as to contain the metal in an amount of 0.1 nmol/cm² to 500 µmol/cm². (Particularly, the amount of the metal contained is more preferably 0.1 to 100 µmol/cm², and further preferably 0.3 to 5 µmol/cm².) This is because if the content of the metal is less than 0.1 nmol/cm², the aforementioned functions of the ions of the metal are not fully performed, and if the content of the metal exceeds 500 µmol/cm², it becomes difficult to obtain adequate power generation performance.

The present embodiment has been described in connection with both of the fuel electrode membrane 22 and the oxidant electrode membrane 23 containing the ions of the metal. Depending on various conditions, however, all or part of one of the fuel electrode membrane and the oxidant electrode membrane may contain the ions of the metal.

### Third Embodiment

A third embodiment of each of a solid polymer electrolyte membrane electrode assembly and a solid polymer electrolyte fuel cell using it, according to the present invention, will be described based on FIG. 4. FIG. 4 is a schematic configuration drawing of the solid polymer electrolyte membrane electrode assembly. The same parts as those in the foregoing first and second embodiments will be indicated by the same numerals as the numerals used in the first and second embodiments, to avoid overlaps of the explanations offered in the first and second embodiments.

The solid polymer electrolyte membrane electrode assembly according to the present embodiment, as shown in FIG. 4, is a solid polymer electrolyte membrane electrode assembly (cell) 30, which comprises a fuel electrode membrane 12 disposed on one surface of a solid polymer electrolyte membrane 21, and an oxidant electrode membrane 13 disposed on the other surface of the solid polymer electrolyte membrane 21, and in which a metal ion-containing membrane 34 containing ions of at least one metal of Ce, Tl, Mn, Ag and Yb is contained each between the solid polymer electrolyte membrane 21 and the fuel electrode membrane 12 and between the solid polymer electrolyte membrane 21 and the oxidant electrode membrane 13.

The solid polymer electrolyte membrane 21, as explained in the aforementioned second embodiment, is a cation exchanger polymer (e.g., "Nafion" (registered trademark), Du Pont) containing proton (H⁺) conducting groups (e.g., sulfonic acid groups (SO₃⁻)).

The fuel electrode membrane 12, as explained in the aforementioned first embodiment, is a carbon powder bound in a membranous form with the use of a binder comprising a polymer electrolyte such as a cation exchanger polymer, the carbon powder having a Pt-Ru-based catalyst carried thereon.

The oxidant electrode membrane 13, as explained in the aforementioned first embodiment, is a carbonpowder bound in a membranous form with the use of a binder comprising a polymer electrolyte such as a cation exchanger polymer, the carbon powder having a Pt-based catalyst carried thereon.

The metal ion-containing membrane 34 is a compound, which forms the ions of the metal, bound in a membranous form with the use of a binder comprising a polymer electrolyte such as a cation exchanger polymer. (For example, the compound which forms the ions of the metal is an oxide, a hydroxide, a halide (chloride, fluoride or the like), an inorganic acid salt compound (sulfate, carbonate, nitrate or phosphate), or an organic acid salt compound (acetate, oxalate or the like) of the aforementioned metal.)

The metal ion-containing membranes 34 can be easily disposed on both surfaces of the solid polymer electrolyte membrane 21 by dispersing the binder and the above compound in a solvent (e.g., ethanol) to form a slurry, and spraying or coating the slurry onto one surface and the other surface of the solid polymer electrolyte membrane 21, followed by drying, before the fuel electrode membrane 12 and the oxidant electrode membrane 13 are formed on the solid polymer electrolyte membrane 21.

That is, the aforementioned first embodiment is the cell 10 having the solid polymer electrolyte membrane 11 containing the ions of the metal, and the second embodiment is the cell 20 having the fuel electrode membranes 22 and 23 containing the ions of the metal. On the other hand, the present embodiment is the cell 30 in which the metal ion-containing membranes 34 containing the ions of the metal are newly provided between the solid polymer electrolyte membrane 21 and the electrode membranes 12, 13.

A solid polymer electrolyte fuel cell according to the present embodiment, which has a stack constituted in the same manner as in the aforementioned first and second embodiments using the so constructed cell 30, is operated in the same way as in the first and second embodiments, whereby electric power can be obtained.

When hydrogen and oxygen are supplied into the cell 30, or during the above-mentioned reaction, there maybe a case where a side reaction product such as hydrogen peroxide (H₂O₂) is formed, and impurities such as iron ions (Fe²⁺) may further enter the stack or the cell 30. Even in this case, the metal ion-containing membranes 34 are provided between the solid polymer electrolyte membrane 21 and the electrode membranes 12, 13. Thus, the solid polymer electrolyte membrane 21 is inhibited from being deteriorated without being decomposed, as in the aforementioned first and second embodiments.

The reason behind this advantage is not clear as in the aforementioned first and second embodiments, but the aforementioned ions of the metal (e.g., Ce ions) in the metal ion-containing membranes 34 of the cell 30, impurities (e.g., iron ions), and hydrogen peroxide are assumed to react in the same manner as in the first and second embodiments. That is, the ions of the metal in the metal ion-containing membrane 34, such as cerium ions, change hydrogen peroxide, which is a source of hydroxy radicals, into water. These metal ions also change Fe²⁺, which generates hydroxy radicals from hydrogen peroxide, into Fe³⁺, and at the same time, change the resulting hydroxy radicals into hydroxide ions.

Hence, even if the impurities, such as iron ions (Fe²⁺), enter the stack or cell 30, it is assumed that the generation of hydroxy radicals is suppressed, and the deterioration of the solid polymer electrolyte membrane 21 by hydroxy radicals which have been generated is inhibited, as in the first and second embodiments.

According to the cell 30 of the present embodiment, therefore, even when the humidification of the solid polymer electrolyte membrane 21 is greatly suppressed, the generation of hydroxy radicals due to the entry of impurities such as iron ions (Fe²⁺) can be curbed, and the deterioration of the solid polymer electrolyte membrane 21 by hydroxy radicals which have been generated can be inhibited, as in the first and second embodiments. Thus, long-term durability can be enhanced.

Consequently, the solid polymer electrolyte fuel cell according to the present embodiment, as in the aforementioned first and second embodiments, can achieve improvements in the electrical efficiency and stable operability of the fuel cell system owing to decreases in the amount of humidification of the solid polymer electrolyte membrane 21, and can markedly increase the flexibility of the operating conditions concerned with the humidification of the solid polymer electrolyte membrane 21. Thus, the operation management of the fuel cell related to the humidification canbe easilyperformed and, even after the start or stop of operation or after load following operation on a daily basis, long-term durability can be enhanced, and a decrease in the frequency of maintenance such as replacement can be achieved to decrease the running cost.

The metal ion-containing membrane 34 preferably contains the compound, which generates the ions of the metal, so as to contain the metal in an amount of 0.1 nmol/cm² to 500 µmol/cm². (Particularly, the amount of the metal contained is more preferably 0.1 to 100 µmol/cm², and further preferably 0.3 to 5 µmol/cm².) This is because if the content of the metal is less than 0.1 nmol/cm², the aforementioned functions of the ions of the metal are not fully performed, and if the content of the metal exceeds 500 µmol/cm², it becomes difficult to obtain adequate power generation performance.

The present embodiment has been described in connection with the metal ion-containing membranes 34 being disposed between the solid polymer electrolyte membrane 21 and the fuel electrode membrane 12 and between the solid polymer electrolyte membrane 21 and the oxidant electrode membrane 13. Depending on various conditions, however, the metal ion-containing membrane 34 may be disposed in all or part of the spacing between the solid polymer electrolyte membrane 21 and the fuel electrode membrane 12, or in all or part of the spacing between the solid polymer electrolyte membrane 21 and the oxidant electrode membrane 13.

### Other embodiments

As other embodiments, the features of the above-described first to third embodiments can be combined, as appropriate, according to needs.

The above first to third embodiments have been described in connection with the use of a stack of a plurality of the cells 10, the cells 20, or the cells 30 in solid polymer electrolyte fuel cells. As other embodiments, it is possible, for example, to use a stack, which is constructed by stacking a plurality of the cells 10, 20 or 30, as an ozone generator by supplying source water to the stack, and electrolyzing the source water in the cells to generate oxygen, including ozone, and hydrogen.

### Example

A confirmation test was conducted to confirm the effects of the solid polymer electrolyte membrane electrode assembly, and the solid polymer electrolyte fuel cell using it, according to the present invention. Details of the confirmation test will be offered below.

### [Test A]

A solid polymer electrolyte membrane ("Nafion 112 (trade name)", Du Pont), weighed beforehand, was dipped in an aqueous solution having a total metal ion concentration of 1 mol/liter and containing a mixture of the compound described in Table 1 and FeSO₄·7H₂O at a molar ratio of 2:1, the compound generating the aforementioned ions of the metal. By so doing, the hydrogen ion sites of the proton conducting groups (sulfonic acid groups) of the membrane were replaced by the ions of the metal (including iron ions) to prepare test samples A1 to A5.

Then, the test samples A1 to A5 were dipped in a 30% aqueous solution of hydrogen peroxide for compulsory deterioration (70°C×10 hours). Then, the test samples A1 to A5 were withdrawn from the aqueous solution, and dipped into a dilute aqueous solution of hydrochloric acid to substitute the ions of the metal (including iron ions), which had substituted for the proton conducting groups (sulfonic acid groups), by hydrogen again. The so treated test samples were washed with water, and dried. Then, the weights of the test samplesA1 to A5 were measured, and decease rates relative to the previously measured weight of the initial solid polymer electrolyte membrane were calculated to determine the degree of deterioration of the test samples A1 to A5.

If deterioration proceeds, the polymer constituting the solid polymer electrolyte membrane is disrupted to form low molecular portions. These low molecular portions are released from the body portion, and dispersed in the aqueous solution. As a result, the weight of the body portion withdrawn from the aqueous solution is less than the initial weight. The test utilizes this phenomenon.

As a control, the test was conducted on a control sample A1 in which the hydrogen ion sites of the proton conducting groups (sulfonic acid groups) of the solid polymer electrolyte membrane were substituted by iron ions alone, without the use of the ions of the metal. The results are shown in Table 1.

**Table 1**

| | Test Sample A1 | Test Sample A2 | Test Sample A3 | Test Sample A4 | Test Sample A5 | Control Sample A1 |
|---|---|---|---|---|---|---|
| Compound | Ce (NO₃)₃ ·6H₂O | TlNO₃ | MnCl(II) ·4H₂O | AgCl | YbCl₃ | None |
| Metal species | Ce | Tl | Mn | Ag | Yb | None |
| Amount of substituted ions | 0.61 | 0.61 | 0.61 | 0.61 | 0.61 | - |
| Weight decrease rate (%) | 0.53 | 5.14 | 1.21 | 0.44 | 4.04 | 6.07 |

As seen from Table 1, the test samples A1 to A5 showed low weight decrease rates in comparison with the control sample A1. Of them, the test sample A1 (Ce), the test sample A3 (Mn), and the test sample A4 (Ag) were very low in weight decrease rate. The test sample A1 (Ce) and the test sample A4 (Ag), in particular, were markedly low in weight decrease rate.

### [Test B]

CeCO₃·8H₂O powder and a cation exchanger polymer solution (a 5% solution of Nafion (trade name), Du Pont) were mixed into a solvent (ethanol) such that the volume ratio of the solids when dry would be 1:1. The resulting mixture was coated on one surface of a perfluorosulfonate resinmembrane ("Nafion 112 (tradename)", DuPont), which was a solid polymer electrolyte membrane, such that the thickness of a cerium carbonate layer when dry would be 15 µm, thereby forming a metal ion-containing membrane (cerium content: about 3 µmol/cm²) on one surface of the solid polymer electrolyte membrane.

Separately, carbon black having platinum-based catalyst particles (average particle diameter 3 nm) carried (45%byweight) thereon, andaperfluorosulfonate resin solution ("SE-5112 (trade name)", Du Pont) were mixed in a nitrogen atmosphere such that the weight ratio when dry would be 1:1. Then, ethanol was added, whereafter the mixture was dispersed under ice-cooled conditions (0°C) by means of an ultrasonic cleaner to prepare a slurry for an oxidant electrode membrane.

Separately, carbon black having platinum ruthenium-based catalyst particles (average particle diameter 3 nm) carried (54% by weight) thereon, and a perfluorosulfonate resin solution ("SE-5112 (trade name) ", Du Pont) were mixed in a nitrogen atmosphere such that the weight ratio when dry would be 1.0:0.8. Then, ethanol was added, whereafter the mixture was dispersed under ice-cooled conditions (0°C) by means of an ultrasonic cleaner to prepare a slurry for a fuel electrode membrane.

Then, the solid polymer electrolyte membrane having the metal ion-containing membrane formed thereon was held at a predetermined temperature (60°C). The above-mentioned slurry for an oxidant electrode membrane was coated on the surface of the solid polymer electrolyte membrane bearing the metal ion-containing membrane to form an oxidant electrode membrane. The above slurry for a fuel electrode membrane was coated on the remaining surface of the solid polymer electrolyte membrane to form a fuel electrode membrane. The resulting laminate was dried to produce a cell (test sample B1). Each of the slurries was coated to a Pt content of 0.5 mg/cm².

Then, the above-mentioned cell (test sample B1) was sandwiched between stainless separators, each of the separators having, on an upper surface thereof, carbon paper rendered water repellent by a water repellent agent, such as polytetrafluoroethylene. A 75% hydrogen gas (25% nitrogen gas) was supplied to the fuel electrode membrane, and air was supplied to the oxidant electrode membrane to perform power generation. The humidity of each of the gases was adjusted by means of a temperature controller and a humidifier. The relative humidity of each gas at the time of supply was 13%, and the temperature of the cell was 85°C.

A nitrogen gas was supplied, instead of air, to the oxidant electrode membrane at intervals of a predetermined time, and the hydrogen gas concentration in the nitrogen gas discharged from the oxidant electrode membrane of the cell was measured with the passage of time. By this procedure, the durability of the cell was evaluated. (If the solid polymer electrolyte membrane is deteriorated and damaged, the amount of leakage of the hydrogen gas from the fuel electrode membrane to the oxidant electrode membrane increases.)

For purposes of comparison, a cell devoid of the metal ion-containing membrane in the test sample B1 (namely, a control sample B1) was also prepared, and its durability was evaluated in the same manner as in the case of the test sample B1. The results are shown in FIG. 5. In FIG. 5, the horizontal axis shows relative times in the test sample B1, assuming that the time when the amount of leakage of hydrogen in the discharged gas from the oxidant electrode membrane in the control sample B1 reached 3% was taken as 1.

As shown in FIG. 5, the test sample B1 was found to be able to suppress gas leakage for a long period of time, as compared with the control sample B1. Accordingly, it was confirmed in the solid polymer electrolyte fuel cell of the present invention that damage to the solid polymer electrolyte membrane due to its deterioration was markedly suppressed, and durability was remarkably enhanced.

As noted above, the solid polymer electrolyte membrane electrode assembly and the solid polymer electrolyte fuel cell using it, according to the present invention, can be utilized very effectively in various industries.

## Claims

1. A solid polymer electrolyte membrane electrode assembly comprising a fuel electrode membrane (12) disposed on one surface of a solid polymer electrolyte membrane (21), and an oxidant electrode membrane (13) disposed on other surface of said solid polymer electrolyte membrane (21), and **characterized in that** a metal ion-containing membrane (34) containing at least one metal of Ce, Tl, Mn, Ag and Yb in an amount of 0.1 nmole/cm² to 500 µmole/cm² is disposed between said solid polymer electrolyte membrane (21) and said fuel electrode membrane (12) or/and between said solid polymer electrolyte membrane (21) and said oxidant electrode membrane (13).

2. A solid polymer electrolyte fuel cell comprising a stack (100) prepared by stacking a plurality of said solid polymer electrolyte membrane electrode assemblies according to claim 1.

## Patentansprüche

1. Festpolymerelektrolyt-Membranelektroden-Anordnung, umfassend eine Brennstoffelektrodenmembran (12), welche auf einer Oberfläche einer Festpolymerelektrolytmembran (21) angeordnet ist, und eine Oxidationselektrodenmembran (13), welche auf einer anderen Oberfläche der Festpolymerelektrolytmembran (21) angeordnet ist, und **dadurch gekennzeichnet, daß** eine metallionenhaltige Membran (34), die wenigstens ein Metall aus Ce, Tl, Mn, Ag und Yb in einer Menge von 0,1 nmol/cm² bis 500 µmol/cm² enthält, zwischen der Festpolymerelektrolytmembran (21) und der Brennstoffelektrodenmembran (12) und/oder zwischen der Festpolymerelektrolytmembran (21) und der Oxidationselektrodenmembran (13) angeordnet ist.

2. Festpolymerelektrolyt-Brennstoffzelle, umfassend einen Stapel (100), der durch Stapeln einer Mehrzahl der Festpolymerelektrolyt-Membranelektroden-Anordnungen nach Anspruch 1 bereitet ist.

## Revendications

1. Ensemble d'électrodes à membranes à électrolyte polymère solide comprenant une membrane d'électrode à combustible (12) disposée sur une surface d'une membrane à électrolyte polymère solide (21), et une membrane d'électrodes à comburant (13) disposée sur une autre surface de ladite membrane à électrolyte polymère solide (21), et **caractérisé en ce qu'**une membrane contenant des ions métalliques (34) contenant au moins un métal de Ce, Tl, Mn, Ag et Yb en une quantité de 0,1 nmole/cm² à 500 µmole/cm² est disposée entre ladite membrane à électrolyte polymère solide (21) et ladite membrane d'électrodes à combustible (12) et/ou entre ladite membrane à électrolyte polymère solide (21) et ladite membrane d'électrodes à comburant (13).

2. Pile à combustible à électrolyte polymère solide comprenant un empilement (100) préparé en empilant une pluralité desdites ensembles à électrodes à membranes à électrolyte polymère solide selon la revendication 1.
